# FASCICULE DE BREVET EUROPEEN

(11) **EP 3 469 452 B1**
(45) Date de publication et mention de la délivrance du brevet: **06.10.2021**
(21) Numéro de dépôt: 17732802.8
(22) Date de dépôt: 09.06.2017
(51) Int. Cl.: G06F 1/32, G06Q 20/10, G06F 1/3206, G06F 1/3234, G06Q 20/20, G07G 1/00, G07G 1/12

(54) **GESTION OPTIMISÉE DE L'ALIMENTATION D'UN MICROCONTRÔLEUR**
OPTIMIERTE VERWALTUNG DER STROMVERSORGUNG EINES MIKROCONTROLLERS
OPTIMISED MANAGEMENT OF THE POWER SUPPLY OF A MICROCONTROLLER

(30) Priorité: 09.06.2016 FR 1655300
(43) Date de publication de la demande: 17.04.2019
(73) Titulaire: Ingenico Group, 75015 Paris (FR)
(72) Inventeur: PHILIBERT, Eric, 38160 Saint-Marcellin (FR); AY, Slimane, 26300 Bourg-De-Peage (FR)
(74) Mandataire: Vidon Brevets & Stratégie
(86) Numéro de dépôt international: PCT/EP2017/064090
(87) Numéro de publication internationale: WO 2017/212020

(56) Documents cités:
- US-A1- 2008 074 171
- US-A1- 2008 155 280
- US-A1- 2015 178 008
- US-A1- 2016 004 292

## Description

### 1. Domaine de l'invention

L'invention se rapporte au domaine des dispositifs électroniques pouvant offrir des applications « autonomes » ou « auto-alimentées ». L'invention concerne plus spécifiquement l'optimisation de la consommation d'énergie de tels dispositifs, particulièrement en mode « veille » ou « économie d'énergie ».

### 2. Art Antérieur

Certains dispositifs électroniques (comme les smartphones, tablettes, terminaux de paiement électronique actuels) nécessitent la mise en œuvre d'un microcontrôleur puissant et performant, afin de pouvoir proposer de manière optimale toutes les applications requises.

Pour ce faire, il existe globalement deux familles de microcontrôleurs :
- premier type : les microcontrôleurs très peu consommateurs d'énergie en mode « veille » mais très consommateurs d'énergie en fonctionnement ;
- deuxième type : les microcontrôleurs très consommateurs d'énergie en mode « veille » mais peu consommateurs d'énergie en fonctionnement.

Le choix d'un microcontrôleur du deuxième type est préféré notamment pour répondre à des exigences assez strictes en terme de consommation d'énergie des applications autonomes. En revanche, avec ce deuxième type de microcontrôleurs, les exigences de faible consommation d'énergie sont respectées en fonctionnement mais pas en mode « veille ».

Ainsi, pour pallier cet inconvénient de consommation d'énergie trop élevée en mode « veille », il est courant de ne pas utiliser le mode « veille » du microcontrôleur mais d'éteindre ce dernier pour réduire sa consommation d'énergie. Cette solution d'utilisation présente cependant un autre inconvénient lié au temps de redémarrage/réaction du microcontrôleur au réveil. En effet, ce temps de réveil est souvent trop long et engendre une dégradation notable de l'expérience utilisateur.

Ainsi, par exemple, dans le domaine des terminaux de paiement électronique, un temps de redémarrage/réveil trop long peut non seulement fortement dégrader l'expérience utilisateur lors d'une transaction mais également fortement ralentir le fonctionnement général d'un commerce par exemple, comme un restaurant à une heure de forte affluence.

Il existe donc un besoin pour une technique permettant l'utilisation de microcontrôleurs présentant une consommation d'énergie optimale/minimale tant en fonctionnement qu'en mode « veille », tout en présentant un temps de réaction optimal en sortie de mode « veille ». Document US 2008/074171 A1 propose une technique permettant de limiter les fuites de courant dans un circuit intégré (100, 200) comprenant deux domaines d'alimentation, chacun étant relié à un bloc distinct (A, B) dans le circuit intégré. Le circuit intégré comprend également un circuit de contrôle (106, 206) générant des premier et second signaux de contrôle (CTLA, CTLB) permettant de connecter sélectivement le premier domaine d'alimentation à une première source d'alimentation et le deuxième domaine d'alimentation à une deuxième source d'alimentation. Cette technique permet notamment de déconnecter un bloc du circuit intégré lorsqu'il n'est pas utilisé.

### 3. Résumé

L'invention est définie par la revendication indépendante 1. Des modes de réalisation supplémentaires sont définis dans les revendications dépendantes 2-4.

Ainsi, l'invention propose une solution nouvelle et inventive de la gestion de la consommation d'un microcontrôleur en mettant en œuvre une coupure sélective de l'alimentation de certaines unités périphériques du microcontrôleur, tout en conservant l'alimentation du cœur du microcontrôleur, et celle de certaines autres unités périphériques, lors d'une commande d'extinction de ce dernier.

De cette manière, l'extinction du microcontrôleur correspond à une mise en veille « partielle », appelée ci-après « veille optimale », permettant effectivement de diminuer fortement la consommation d'énergie de ce dernier, tout en permettant un redémarrage, ou une sortie de veille rapide grâce à la non coupure de l'alimentation du cœur, et d'autres unités périphériques, du microcontrôleur.

En effet, le principe de l'invention, selon ses différents modes de réalisation, consiste à couper sélectivement l'alimentation des différentes unités du microcontrôleur, au lieu de les couper toutes, comme dans une extinction « classique » du microcontrôleur, ou de ne pas les couper, comme lors d'une mise en veille « classique » du microcontrôleur.

Ainsi, les avantages de l'extinction liés à la baisse de consommation d'énergie du microcontrôleur sont obtenus, sans les inconvénients liés au temps de réveil.

Selon un aspect particulier de l'invention, les moyens sélectifs de gestion de l'alimentation correspondent à un interrupteur commandé relié électroniquement d'une part à une fonction d'extinction interne au microcontrôleur apte à traiter la commande d'extinction et d'autre part à au moins une entrée de commande de l'alimentation de l'unité périphérique.

Ainsi, selon ce mode de réalisation, la coupure sélective de l'alimentation des différentes unités du microcontrôleur est mise en œuvre via un interrupteur commandé (encore appelé « switch » commandé), relié d'une part à la fonction interne d'extinction du microcontrôleur, afin d'être déclenché par une commande d'extinction, et d'autre part à une ou plusieurs entrée de commandes d'alimentation d'unité(s) périphérique(s) du microcontrôleur.

De cette manière, seules les unités périphériques dont les commandes d'alimentation sont reliées à l'interrupteur commandé seront éteintes par une commande d'extinction du microcontrôleur, les autres unités périphériques non reliées, ainsi que le cœur du microcontrôleur, resteront alimentés.

Par exemple, l'unité périphérique correspond à une unité du microcontrôleur non nécessaire au réveil du microcontrôleur et/ou non nécessaire à la sauvegarde de l'état du microcontrôleur.

Ainsi, selon ce mode de réalisation, l'objectif de l'invention est atteint en sélectionnant les unités périphériques à mettre ou non en veille selon qu'elles sont, ou non, indispensables au réveil du microcontrôleur et/ou à la sauvegarde de l'état du microcontrôleur, de manière à obtenir un réveil quasiment instantané du microcontrôleur.

En effet, si seules les unités nécessaires au « minimum vital » du microcontrôleur, c'est-à-dire les unités sollicitées pour le réveil du microcontrôleur et/ou la sauvegarde de son état, restent alimentées pendant la mise en veille du microcontrôleur, le réveil de ce dernier, à réception d'une commande de réveil, sera presque instantané et ne nécessitera que la prise en compte de la commande de réveil.

Les autres unités, dont l'alimentation a été sélectivement coupée, pourront être réalimentées au fur et à mesure de l'utilisation du microcontrôleur.

L'invention concerne également un terminal de paiement électronique comprenant un circuit imprimé tel que décrit précédemment.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue schématique d'une partie d'un circuit imprimé selon un mode de réalisation de l'invention ;
- la figure 2 illustre un diagramme de séquences pour la mise en œuvre de l'invention, selon un mode de réalisation particulier.

### 5. Description

Le principe général de la technique décrite consiste à détourner une fonction interne d'un microcontrôleur destinée à l'éteindre, pour mettre le microcontrôleur en mode « veille optimale » et optimiser la consommation d'énergie du microcontrôleur.

Pour ce faire, la fonction interne d'extinction du microcontrôleur est détournée, par des moyens matériels, de manière à couper sélectivement certaines alimentations de certains éléments, encore appelés unités ou cellules périphériques, du microcontrôleur. Ainsi, seules les alimentations des unités du microcontrôleur non utiles au réveil de ce dernier et/ou non utiles à la sauvegarde de son état pendant et en sortie d'une veille sont coupées, les autres unités restant alimentées, y compris le cœur du microcontrôleur.

Ainsi, la consommation d'énergie est optimisée car toutes les unités non « vitales » ne sont plus alimentées et ne consomment donc plus d'énergie pendant la mise en « veille optimale » du microcontrôleur. De plus, le fait de conserver l'alimentation des unités gérant le « minimum vital » du microcontrôleur permettent un réveil, ou une sortie du mode « veille optimale », quasiment instantané du microcontrôleur.

La solution de l'invention, selon ses différents modes de réalisation, répond donc à la double exigence de faible consommation en mode « veille optimale » et de temps de réveil optimal, sans modification du logiciel de pilotage du microcontrôleur, ni de sa programmation interne, mais uniquement via quelques modifications matérielles apportées au circuit imprimé sur lequel est implanté le microcontrôleur.

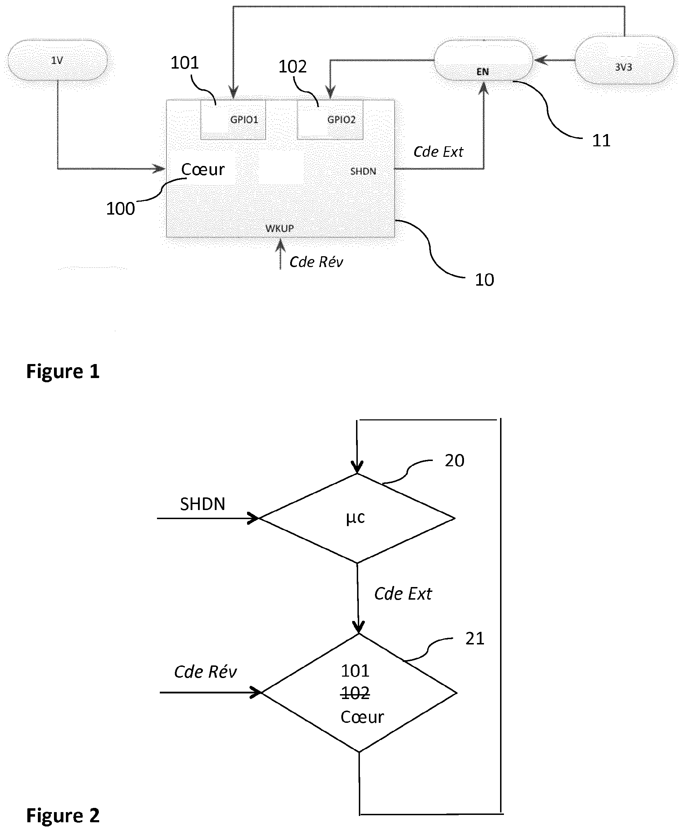

On décrit maintenant, en relation avec la figure 1, un mode de réalisation de l'invention, dans lequel le « détournement » de la fonction interne d'extinction du microcontrôleur est mise en œuvre via un interrupteur commandé, composant électronique connu en soit.

La figure 1 représente une partie d'un circuit imprimé (par exemple dans un terminal de paiement électronique ou tout autre équipement électronique confronté au problème technique posé), illustrant principalement un microcontrôleur 10 et des éléments d'alimentation de ce dernier.

Ainsi, le cœur 100 du microcontrôleur (« *CORE* » en anglais) est alimenté en 1V, alors que les unités périphériques sont alimentées en 3,3V (par exemple via les entrées d'alimentation 101 et 102, correspondant respectivement à l'alimentation de l'unité périphérique GPIO1 et de l'unité périphérique GPIO2).

Le microcontrôleur 10 présente une entrée, notée WKUP, de commande de réveil *Cde Rév* ainsi qu'une sortie de sa fonction interne d'extinction, notée SHDN, permettant, selon les différents modes de réalisation de l'invention, de commander l'interrupteur commandé 11.

En fonctionnement classique, le microcontrôleur 10 s'éteint complètement, à réception d'une commande SHDN, c'est-à-dire que toutes les alimentations sont coupées, et, à réception d'une commande WKUP, le microcontrôleur 10 se réveille, via la remise en route des alimentations coupées.

Selon l'invention, la mise en œuvre de l'interrupteur commandé 11 permet de choisir quelle(s) alimentations des unités périphériques doivent être coupées pour faire passer le microcontrôleur du mode de fonctionnement au mode « veille optimale », de façon à optimiser sa consommation d'énergie.

Selon l'exemple illustré en figure 1, l'alimentation de l'unité périphérique GPIO2 est commandée par l'interrupteur 11, alors que celles de l'unité périphérique GPIO1 et du cœur du microcontrôleur ne sont pas commandées par l'interrupteur 11. Ainsi, GPIO1 est toujours alimentée en direct par la source 3,3V, et le cœur du microcontrôleur par la source 1V. Par exemple, GPIO1 correspond à la gestion des mémoires RAM.

De cette manière, le cœur du microcontrôleur 10 et l'unité périphérique GPIO1, qui sont jugées indispensables au réveil du microcontrôleur, ainsi qu'à la sauvegarde de son état lors de ses changements de mode, continuent à assurer les fonctions « vitales » du microcontrôleur.

Ainsi, selon cet exemple, lorsque le microcontrôleur 10, en mode de fonctionnement normal, reçoit une commande d'extinction, la sortie de sa fonction interne SHDN (qui est une fonction classique du microcontrôleur 10, non modifiée par la présente invention) envoie une commande *Cde Ext* à l'interrupteur commandé 11, lequel reçoit cette commande *Cde Ext* via ses moyens de réception. L'interrupteur commandé 11 déclenche alors la coupure des alimentations des unités périphériques qui y sont reliées, en l'occurrence l'entrée d'alimentation 102 de l'unité périphérique GPIO2.

Ensuite, lorsque la fonction interne SHDN est désactivée, la coupure de l'alimentation de l'unité périphérique GPIO2 est également désactivée, de façon à alimenter à nouveau l'unité périphérique GPIO2.

Comme illustré en figure 2, lorsque le microcontrôleur 10 est en mode de fonctionnement (20), c'est-à-dire dans un mode où son cœur et tous les périphériques sont alimentés, et qu'il reçoit une commande d'extinction SHDN, une commande *Cde Ext* est transmise, via sa fonction d'extinction interne SHDN, à l'interrupteur commandé 11 (lequel reçoit cette commande *Cde Ext* via ses moyens de réception).

Le microcontrôleur 10 entre alors dans un mode « veille optimale » (21), dans lequel l'alimentation 102 de l'unité périphérique GPI02 est coupée, alors que celles du cœur du microcontrôleur et 102 de l'unité périphérique GPI01 sont maintenues.

Ensuite, la sortie du microcontrôleur 10 de son mode « veille optimale » (21) est mise en œuvre comme un réveil classique, à réception d'une commande de réveil *Cde Rév* sur l'entrée WKUP du microcontrôleur 10. Cette commande de réveil permet de désactiver la sortie SHDN, donc de réalimenter les cellules périphériques dont l'alimentation avait été préalablement coupée via l'interrupteur commandé 11, afin que le microcontrôleur 10 retourne dans un mode de fonctionnement classique (20) et se retrouve dans l'état dans lequel il était avant la demande de mise en « veille optimale ».

## Revendications

1. Circuit imprimé comprenant un microcontrôleur (10) comprenant au moins un élément principal noté coeur (100), et au moins une unité périphérique (102), des moyens matériels de détournement d'une fonction d'extinction interne (*SHDN*) dudit microcontrôleur correspondant à des moyens sélectifs (11) de gestion de l'alimentation dudit microcontrôleur (10) mettant en œuvre les moyens suivants :
• des moyens de réception d'une commande d'extinction (*Cde Ext*) dudit microcontrôleur, ladite commande étant issue d'une fonction d'extinction interne (*SHDN*) dudit microcontrôleur ;
• des moyens de coupure réversible de l'alimentation de ladite au moins une unité périphérique (102) ;
• des moyens de maintien de l'alimentation dudit cœur (100),
lesdits moyens sélectifs (11) étant externes audit microcontrôleur (10).

2. Circuit imprimé selon la revendication 1, **caractérisé en ce que** lesdits moyens sélectifs (11) de gestion de l'alimentation correspondent à un interrupteur commandé (11) relié électroniquement d'une part à une fonction d'extinction interne (*SHDN*) audit microcontrôleur apte à traiter ladite commande d'extinction (*Cde Ext*) et d'autre part à au moins une entrée de commande (102) de l'alimentation de ladite au moins une unité périphérique (102).

3. Circuit imprimé selon la revendication 1, **caractérisé en ce que** ladite au moins une unité périphérique correspond à une unité dudit microcontrôleur (10) non nécessaire au réveil dudit microcontrôleur et/ou non nécessaire à la sauvegarde de l'état dudit microcontrôleur.

4. Terminal de paiement électronique comprenant un circuit imprimé selon les revendications 1 à 3.

## Patentansprüche

1. Leiterplatte, umfassend einen Mikrocontroller (10), umfassend mindestens ein Hauptelement, das Kern (100) genannt wird, und mindestens eine periphere Einheit (102), wobei materielle Mittel zum Umgehen einer internen Shutdown-Funktion *(SHDN)* des Mikrocontrollers, die selektiven Mitteln (11) zum Verwalten der Stromversorgung des Mikrocontrollers (10) entsprechen, folgende Mittel einsetzen:
• Mittel zum Empfangen eines Shutdown-Befehls (*Cde Ext*) von dem Mikrocontroller, wobei der Befehl von einer internen Shutdown-Funktion (*SHDN*) des Mikrocontrollers stammt;
• Mittel zum reversiblen Unterbrechen der Stromversorgung der mindestens einen peripheren Einheit (102);
• Mittel zum Aufrechterhalten der Stromversorgung des Kerns (100),
wobei die selektiven Mitteln (11) außerhalb des Mikrocontrollers (10) liegen.

2. Leiterplatte nach Anspruch 1, **dadurch gekennzeichnet, dass** die selektiven Mittel (11) zum Verwalten der Stromversorgung einem gesteuerten Schalter (11) entsprechen, der einerseits an eine interne Shutdown-Funktion (*SHDN*) an dem Mikrocontroller, die geeignet ist, den Shutdown-Befehl (*Cde Ext*) zu bearbeiten, und andererseits an mindestens einen Steuereingang (102) der Stromversorgung der mindestens einen peripheren Einheit (102) elektronisch angeschlossen ist.

3. Leiterplatte nach Anspruch 1, **dadurch gekennzeichnet, dass** die mindestens eine periphere Einheit einer Einheit des Mikrocontrollers (10) entspricht, die für das Aufwecken des Mikrocontrollers nicht notwendig ist, und/oder die für das Erhalten des Zustands des Mikrocontrollers nicht notwendig ist.

4. Elektronisches Zahlungsendgerät, umfassend eine Leiterplatte nach einem der Ansprüche 1 bis 3.

## Claims

1. Printed circuit comprising a microcontroller (10) comprising at least one main element termed as a core (100), and at least one peripheral unit (102), hardware means for diverting an internal shut-down function (SHDN) of said microcontroller corresponding to selective means (11) for managing the power supply of said microcontroller (10) implementing the following means:
• means for receiving a command (*Cde Ext*) for shutting down said microcontroller, said command coming from an internal shut-down function (SHDN) of said microcontroller;
• means for the reversible cutting off of the power supply of said at least one peripheral unit (102);
• means for maintaining the power supply of said core (100),
said selective means (11) being external to said microcontroller (10).

2. Printed circuit according to claim 1, **characterized in that** said selective means (11) for managing the power supply correspond to a controlled switch (11) electronically connected, on the one hand, to a shut-down function (SHDN) internal to said microcontroller capable of processing said shut-down command (*Cde Ext*) and, on the other hand, to at least one input (102) for commanding the power supply of said at least one peripheral unit (102).

3. Printed circuit according to claim 1, **characterized in** said at least one peripheral unit corresponds to a unit of said microcontroller (10) that is not necessary for waking up the microcontroller and/or not necessary for saving the state of said microcontroller.

4. Electronic payment terminal comprising a printed circuit according to claims 1 to 3.
